# EUROPÄISCHE PATENTSCHRIFT

(11) **EP 3 161 082 B1**
(45) Veröffentlichungstag und Bekanntmachung des Hinweises auf die Patenterteilung: **04.04.2018**
(21) Anmeldenummer: 14732903.1
(22) Anmeldetag: 26.06.2014
(51) Int. Cl.: C09D 183/02, C08J 7/04, D21H 27/10, D21H 27/32, D21H 27/40

(54) **VERFAHREN ZUR AUFBRINGUNG EINER SILIZIUMDIOXIDSCHICHT**
METHOD FOR APPLYING A SILICON DIOXIDE LAYER
PROCÉDÉ D'APPLICATION D'UNE COUCHE DE SILICE

(43) Veröffentlichungstag der Anmeldung: 03.05.2017
(60) Teilanmeldung: 18157801.4
(73) Patentinhaber: Ev Group E. Thallner GmbH, 4782 St. Florian am Inn (AT)
(72) Erfinder: BURGGRAF, Jürgen, A-4780 Schärding (AT)
(74) Vertreter: Schneider, Sascha
(86) Internationale Anmeldenummer: PCT/EP2014/063537
(87) Internationale Veröffentlichungsnummer: WO 2015/197122

(56) Entgegenhaltungen:
- EP-A1- 1 734 016
- EP-A2- 1 003 210
- WO-A2-2011/156484
- US-A- 3 922 392

## Beschreibung

Die vorliegende Erfindung betrifft ein Verfahren zur Aufbringung einer Siliziumdioxidschicht auf ein brennbares und/oder, insbesondere leicht, entflammbares Trägermaterial zur Ausbildung einer, insbesondere für Lebensmittel geeigneten, Verpackung gemäß Patentanspruch 1.

Die Verpackungsindustrie wird durch den Gesetzgeber und die Kunden dazu verpflichtet und veranlasst, Verpackungsmaterialien zur Konservierung, Erhaltung und zum Schutz von Waren, insbesondere von Lebensmitteln, zu produzieren und kontinuierlich zu verbessern.

Die Druckschrift EP 1003210 offenbart ein Verfahren zur Ausbildung von Beschichtungen. Die Druckschrift EP 1734016 A1 offenbart ein Verfahren zur Herstellung von Siliziumdixoidschichten. Druckschrift WO 2011/156484 A2 offenbart ein Verfahren zum Aufwachsen von gleichförmigen Siliziumdioxidschichten auf organischen Substraten bei geringen Temperaturen.

Die Verwendung einer Verpackung als Isoliermaterial wurde bereits durch die Einführung von Konservendosen am Ende des 19. Jahrhunderts, von Kunststoffen und von aluminiumbeschichteten Kartonen mehrmals revolutioniert. Die Konservendose erlaubte erstmals eine hermetische und damit luftdichte Versiegelung von Nahrungsmitteln. Die Kunststoffe revolutionierten vor allem den Massenmarkt durch die Möglichkeit der beliebigen Formgebung der Kunststoffverpackung, sowie der hohen Verfügbarkeit von Kunststoffen. Des Weiteren konnte durch die Verwendung von Kunststoffen auf das im Vergleich zum Kunststoff recht teure, Metall verzichtet werden. Die sogenannten Tetra Paks, aluminiumbeschichteten Kartone, wurden Mitte des 20 Jahrhunderts schließlich zur Konservierung von Flüssigkeiten verwendet.

Die Isolierung dient im Allgemeinen der Abgrenzung des zu schützenden, verpackten Materials, insbesondere Lebensmitteln, von den Einflüssen der Umgebung. Die Einflüsse der Umgebung können vielfältig sein. Manche Lebensmittel müssen luftdicht verpackt werden, sodass der Kontakt mit dem Atmosphärensauerstoff vollständig ausgeschlossen werden muss. Dazu zählen vor allem Lebensmittel, die durch aerobe Bakterien zersetzt werden können. Ein weiterer wichtiger Aspekt ist die Isolierung gegen Biokontamination, daher der Schutz vor Bakterien, Pilzen, Flechten, Viren etc. Sehr viele Verpackungen müssen auch resistent gegen Feuchtigkeitsschwankungen sein, um den Feuchtigkeitsanteil des zu schützenden Produkts konstant zu halten.

Neben den klassischen, allseits bekannten Verpackungsmaterialien, existieren seit einigen Jahren Kompositverpackungsmaterialien die aus mindestens einer extrem dünnen, meistens nanokristallinen oder nanoamorphen, Schicht bestehen. Die Schichten bestehen vorwiegend aus anorganischen, nichtmetallischen, teilweise kristallinen, Materialien. Bei diesen Materialien handelt es sich vorwiegend um Keramiken, also anorganische, nichtmetallische Materialien mit einem sehr geringen Kristallinitätsgrad.

Als Bulkmaterial weisen Keramiken sehr charakteristische Eigenschaften auf. Sie sind, im Vergleich zu den meisten Metallen, extrem spröde, sehr hart, besitzen meistens hohe Festigkeiten, sind vorwiegend Nichtleiter (außer im Falle supraleitender Keramiken, deren Leitfähigkeit aber erst bei sehr geringen Temperaturen zum Tragen kommt). Weiterhin sind Keramiken extrem bioinert und Sie weisen eine hohe Verfügbarkeit auf.

Die so hergestellte Keramikbeschichtung muss dennoch einige Eigenschaften aufweisen, die entscheidend für deren Qualität sind. In den meisten Fällen ist eine impermeable Keramikschicht wünschenswert. Die Impermeabelität verhindert die Diffusion von Gasen, die Bewegung von Viren oder Bakterien von einer Seite der Keramikbeschichtung zur anderen. Für manche Anwendungen muss die Keramikschicht zumindest teilweise permeabel sein, vor allem dann, wenn ein Sauerstofftransport von einer Seite der Keramikbeschichtung zur anderen Seite erfolgen soll. In diesem Fall ist eine gezielte Einstellung der Porengröße wünschenswert. Mit besonderem Vorzug wird die Porengröße dann so eingestellt, dass nur eine erwünschte Spezies, insbesondere Gase, passieren können, während biologische Organismen blockiert werden.

Mit dem Aufkommen der Konservendose in 19. Jahrhundert zeigte sich bereits eines der ersten Probleme bei der Verwendung der falschen Verpackung. Die Konservendosen enthielten zur damaligen Zeit toxische Elemente, die entweder durch die Dosenwand oder durch die Lote, mit denen die Dosen damals verschlossen wurden, in die Nahrungsmittel eingedrungen sind. Dieser Fall zeigt die Notwendigkeit auf, die Verpackungsmaterialien so herzustellen, dass sie mit der verpackten Ware, insbesondere wenn es sich dabei um Lebensmittel handelt, möglichst wenig, mit Vorzug gar nicht, reagiert. Das Verpackungsmaterial darf daher nicht toxisch sein. Sehr oft handelt es sich bei Verpackungen auch um Kompositmaterialien, die aus mehreren unterschiedlichen Materialien bestehen. In diesem Fall gilt die Überlegung selbstverständlich für alle, insbesondere die mit dem Lebensmittel in Kontakt tretenden, Materialien des Komposits analog.

Durch die Entwicklung der Kunststoffe am Beginn des 20. Jahrhunderts wurde der Verpackungsindustrie eine neue Materialklasse zugänglich, mit deren Hilfe es möglich wurde, Waren, allen voran wiederum Nahrungsmittel, schnell, effizient und vor allem kostengünstig zu verpacken. Die Kunststoffe zeichnen sich durch exzellente Verarbeitungsmöglichkeiten, extrem geringe Preise, und beliebige Formbarkeit aus. Die Formbarkeit ist dabei meistens abhängig von der Dicke des verwendeten Packungsmaterials. Durch die einzigartigen, molekularen Eigenschaften der Kunststoffe können diese zu hauchdünnen Folien, deren Dicken im Mikrometerbereich liegen, verarbeitet werden. Genauso gut können aus Kunststoffen formstabile Verpackungen hergestellt werden.

Den positiven Eigenschaften der Kunststoffe steht vor allem ihre niedrige Umweltverträglichkeit gegenüber. Kunststoffe sind molekulare, meist stark verkettete, amorphe oder (teil)kristalline Substanzen, die in den meisten Fällen hydrophobe Eigenschaften aufweisen. Sie werden von natürlichen Organismen wie Bakterien nur sehr schwer abgebaut und zerfallen langsam. Sehr viele Kunststoffe dispergieren und bilden mikro- und/oder nanometergroße Partikel, die von biologischen Organismen absorbiert werden. Viele Kunststoffe enthalten darüber hinaus unerwünschte chemische Elemente. Obwohl die Verwendung von PVC in den letzten Jahrzehnten auf Grund gesetzlicher Bestimmungen rapide zurückgegangen ist, sind negative Auswirkungen noch teilweise erkennbar. Kunststoffe sind daher allgemein als nicht besonders umweltverträglich anzusehen.

Die seit den Fünfzigerjahren des 20. Jahrhunderts produzierten Tetra Paks haben ebenfalls einen beispiellosen Siegeszug angetreten. Bei einem Tetra Pak handelt es sich um einen zumindest an der Innenseite beschichteten Karton. Die Beschichtung besteht meistens aus einer hauchdünnen Aluminiumfolie. Die Außenseiten sind meistens noch mit einer Kunststofffolie, insbesondere Polyethylen, beschichtet. Denkbar ist auch eine Zwischenschicht aus Kunststoff zwischen dem Karton und dem Aluminium. Die unterschiedlichen Schichten werden dabei über eine Verbindungsschicht verbunden. Dieses Kompositmaterial kann effizient und kostengünstig in Form eines Bandprozesses hergestellt, danach ausgeschnitten, gefaltet und in seiner endgültigen Form fixiert und verbunden werden. Da Tetra Paks, im Gegensatz zu Kunstoffen, ein Kompositmaterial darstellen, müssen die einzelnen Materialarten durch aufwendige und kostspielige Prozesse voneinander getrennt werden. Dementsprechend kompliziert, aufwendig und teuer ist das Recycling.

Die genannten Verpackungsmethoden haben entscheidende Nachteile, insbesondere die Umweltbelastung. Kunststoffe und Tetra Paks sind vor allem sehr schwer abbaubar.

Aufgabe der vorliegenden Erfindung ist es daher, ein Verfahren anzugeben, mit dem eine, insbesondere für Lebensmittel geeignete, Verpackung herstellbar ist, die möglichst bioinert ist. Eine weitere Aufgabe besteht darin, eine günstige Herstellungsmethode mit möglichst geringem Energieaufwand anzugeben.

Diese Aufgabe wird mit den Merkmalen des Patentanspruchs 1 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart gelten und in beliebiger Kombination beanspruchbar sein.

Die Grundidee der vorliegenden Erfindung ist es, Siliziumdioxid bei geringen Temperaturen zwischen 5°C und 100°C, insbesondere ohne Heizen, vorzugsweise bei Raumtemperatur und/oder im Bereich des Atmosphärendrucks, insbesondere ohne separate Druckbeaufschlagung, auf ein zellulosehaltiges Trägersubstrat aufzubringen oder eine eine großvolumiges, poröses oder durchlässiges, zellulosehaltiges Trägermaterial damit zu imprägnieren, wobei beim Imprägnieren eine Beschichtung einer Oberfläche von Hohlräumen erfolgt. Ein bevorzugter Temperaturbereich liegt zwischen 5 und 50°C, noch bevorzugter zwischen 5 und 30°C.

Die Erfindung betrifft mit anderen Worten insbesondere ein Verfahren zur Herstellung einer, insbesondere als Barriereschicht ausgebildeten, nanokristallinen keramischen Beschichtung, insbesondere einer Siliziumdioxidbeschichtung, bei vergleichsweise niedrigen Temperaturen, insbesondere Raumtemperatur. Die Siliziumdioxidbeschichtung wird vorzugsweise zum Beschichten von Verpackungsmaterial, insbesondere zur Ausbildung einer Verpackung, benutzt.

Des Weiteren beschreibt die Erfindung ein mit Hilfe der erfindungsgemäßen Methode hergestelltes, vorzugsweise für die Lebensmittelindustrie verwendbares, Verpackungsmaterial.

Erfindungsgemäß werden unter Verpackungsmaterialien insbesondere Gegenstände zum Schutz eines (Lebensmittel-)Objektes vor seiner Umwelt verstanden. Erfindungsgemäße Verpackungsmaterialen sind insbesondere (Kunststoff-)Folien oder (Papier-)Kartone.

Die Erfindung handelt von einer Methode, ein zellulosehaltiges Material, bei niedrigen Temperaturen, vorzugsweise bei Raumtemperatur, mit einer, insbesondere als Barriereschicht ausgebildeten, keramischen Schicht, vorzugsweise Siliziumdioxid, zu beschichten. Bei dem Trägermaterial handelt es sich vorzugsweise um ein Verpackungsmaterial, insbesondere um Karton, Papier oder Kunststoff. Mit besonderem Vorzug werden Verpackungsmaterialien für Nahrungsmittel mit der erfindungsgemäßen Ausführungsform beschichtet.

In einer speziellen erfindungsgemäßen Ausführungsform kann auch die Oberfläche eines starren und steifen, insbesondere großvolumigen Objekts, beispielsweise einer Waferbox, beschichtet werden.

In einer weiteren, insbesondere eigenständigen, erfindungsgemäßen Ausführungsform ist die Imprägnierung von Trägermaterialien bzw. Trägersubstraten aus Holz, Wolle, insbesondere Baumwolle, oder allen daraus gefertigten Arten von Kleidungsstücken denkbar. Bei dem Imprägnierungsprozess erfolgt eine Beschichtung der internen Oberfläche des großvolumigen, porösen oder durchlässigen, Trägermaterials. Die interne Oberfläche ist die Oberfläche von Hohlräumen, also insbesondere ausgenommen außenliegende Oberflächen des Trägermatierals.

Die Schichtdicke der Keramikschicht/Siliziumoxidschicht auf der ersten Oberfläche und oder zweiten Oberfläche und/oder der internen Oberfläche des Trägermaterials/Trägersubstrats ist insbesondere kleiner als 1 µm, vorzugsweise kleiner als 100nm, noch bevorzugter kleiner als 10nm, am bevorzugtesten kleiner als 1nm.

Nachfolgend wird eine Erläuterung bezüglich des Bruchverhaltens von erfindungsgemäß bevorzugten Bulkkeramiken, insbesondere mit einer erfindungsgemäßen keramischen Schicht, gegeben.

Bulkmaterialien werden entweder auf Zug (seltener auf Druck) und sehr oft auf Biegung und Torsion belastet, um werkstoffspezifische Größen wie die Zugfestigkeit, die Streckgrenze oder die Bruchspannung ermitteln zu können. Keramiken sind vorwiegend extrem spröde und werden daher unter die sprödbrechenden Werkstoffe eingeordnet. Ein charakteristisches Merkmal spröd brechender Werkstoffe (wie Keramik) ist eine sehr kleine (im Falle ideal spröd brechender Werkstoffe verschwindend geringe bzw. überhaupt nicht vorhandene) plastische Verformung. Spröde Bauteile brechen daher beim Überschreiten der Bruchspannung spontan, ohne sich vorher plastisch zu verformen. Die Ermittlung der Bruchspannung erfolgt vorwiegend durch eine Zugbelastung. Bei einer uniaxialen Zugbelastung bricht das Bauteil, wenn die Zugspannung größer wird als die Bruchspannung. Bei einem allgemeinen, mehrachsigen Spannungszustand berechnet man eine Vergleichsspannung, die mit der Bruchspannung des Bauteils verglichen wird.

Die erfindungsgemäße, insbesondere dünn aufgebrachte, Keramikschicht soll in der Anwendung vor allem als Isoliermaterial auf einer Trägerschicht dienen. Entsprechend werden die dünnen Keramikschichten vorwiegend auf Biegung beansprucht.

Durch die extrem geringe Dicke der Keramikschicht (bevorzugt im Nanometerbereich) können die so hergestellten Verpackungen quasi beliebig verbogen werden, ohne dass es zu einem Bruch der aufgebrachten Keramikschicht kommt. Die, insbesondere durch eine Verbiegung des Verpackungsmaterials in der Keramikschicht induzierten, Biegespannungen sind wegen der geringen Schichtdicken so klein, dass sie (bzw. deren berechnete Vergleichsspannung) nicht die Bruchfestigkeit des Materials überschreiten. Damit können erfindungsgemäß hergestellte Verpackungen verformt werden, ohne Gefahr zu laufen, durch die Verformung die Keramikschicht zu zerstören.

Die erfindungsgemäße Methode erlaubt die Beschichtung von praktisch beliebigen Trägermaterialien bei niedrigen Temperaturen, insbesondere bei Raumtemperatur. Durch den erfindungsgemäßen Prozess können auch Keramiken, insbesondere Siliziumdioxid, auf dem Trägermaterial abgeschieden werden. Dadurch eröffnet sich eine völlig neue Möglichkeit für die Verpackungsindustrie.

Erfindungsgemäß ist die Siliziumdioxidschicht insbesondere als Barriereschicht ausgebildet. Erfindungsgemäß ist dabei insbesondere vorgesehen, dass eine mindestens eine innenliegende Folie aufweisende Verpackung durch das Vorsehen einer Barriereschicht eine verbesserte Durchtrittssperrwirkung gegen mindestens eine chemische Verbindung und/oder mindestens ein chemisches Element, insbesondere Wasserdampf und/oder Gase und/oder eine andere chemische Verbindung, z. B. ätherische Öle oder Lösemittel und/oder ein chemisches Element erhalten kann, um ein innenliegendes Produkt, insbesondere ein Lebensmittelprodukt, beispielsweise ein Kaffeepulver vor Alterungserscheinungen, insbesondere Oxidationserscheinungen oder sonstigen Beeinträchtigungen zu schützen. Ferner hat die Anmelderin erkannt, dass es zum Schutz der Barriereschicht vor äußeren mechanischen Einflüssen vorteilhaft ist, diese Barriereschicht im Inneren des Behälterkörpers anzuordnen, wodurch grundsätzlich auf ein Überlackieren mit einer Schutzlackschicht verzichtet werden kann (jedoch nicht muss).

Bevorzugt handelt es sich bei der keramischen Beschichtung um eine funktionale Beschichtung, die gegen den Durchtritt von Feuchtigkeit und/oder Gasen schützt. Bevorzugt ist die Beschichtung derart gewählt, dass sie Migrationserscheinungen von dem verpackten Produkt in die mindestens eine Kunststoffschicht reduziert. Ganz besonders bevorzugt ist die Barriereschicht zusätzlich oder alternativ derart ausgelegt, dass mit dieser der Eintritt von chemischen Substanzen und/oder Elementen aus der mindestens einen Kunststoffschicht in das verpackte Produkt minimiert wird. Derartige Eigenschaften sind insbesondere äußerst vorteilhaft im Falle der Ausbildung der Verpackung oder eines aus der Verpackung hergestellten Verpackungsbehälters als Lebensmittelverpackungsbehälter. Insbesondere für den Fall der Verpackung von Gewürzen ist es vorteilhaft, wenn die Barriereschicht eine Durchtrittssperrwirkung gegen ätherische Öle aufweist. Insbesondere dann, wenn in dem Verpackungsbehälter technische Produkte verpackt werden sollen, ist es bevorzugt, wenn die Barriereschicht eine Durchtrittssperrwirkung gegenüber Lösemitteln aufweist.

Als erfindungsgemäßes Trägersubstrat oder Trägermaterial werden Cellulosematerialien, oder aus chemisch modifizierter Cellulose hergestellte hergestellte Materialen verwendet.

Ein erfindungsgemäßer Aspekt besteht insbesondere in der Anwendung eines Niedertemperaturbeschichtungsprozesses zur Beschichtung brennbarer und/oder leicht entflammbarer zellulosehaltigen zellulosehaltigen Materialien. Die unterschiedlichen Materialarten bilden ein im weiteren Verlauf als Trägersubstrat oder Trägermaterial bezeichnetes Verpackungsgerüst oder Verpackungsbulkmaterial zur Herstellung einer Verpackung. Bei dem Trägersubstrat kann es sich um ein großvolumiges, beliebig kompliziert geformtes Bauteil, beispielsweise eine Kunststoffflasche, handeln. Denkbar wären:
- Folien
- Kartone
- Flaschen
- Fasern, insbesondere
   - Naturfasern
   - Pflanzenfasern
   - Tierische Fasern
- Schachteln, insbesondere
   - Waferboxen
- Kleidung
- Möbel
Das erfindungsgemäße Trägermaterial ist ein zellulosehaltiges Trägermaterial und bevorzugt ist seine Verwendung bei Verpackungen, insbesondere Lebensmittelverpackungen. Die erfindungsgemäße Ausführungsform eignet sich insbesondere zur Beschichtung folgender Materialklassen
- Holz
- Faserhaltige
   ∘ Baumwolle
- Zellulosehaltige Naturstoffe

In einer bevorzugten Ausführungsform besitzt das Trägersubstrat eine plattenförmige und/oder folienartige Struktur. Insbesondere werden mit dem erfindungsgemäßen Verfahren zellulosehaltige Papiere oder Kartone beschichtet, die in weiteren Prozessschritten weiterverarbeitet und/oder geformt werden. Erfindungsgemäß denkbar wäre unter anderem die Beschichtung eines flachen Kartons, der in weiteren Prozessschritten zu einem rechteckigen, Verpackungskarton umgeformt wird. Insbesondere wird ein Trägermaterial oder Trägersubstrat gewählt, das
a) einem Flammpunkt > 0°C und < 100°C und/oder
b) einem Brennpunkt > 20°C und < 150°C und/oder
c) einer Zündtemperatur > 100°C und < 600°C,
   vorzugsweise > 150°C und < 300°C
aufweist.

Die erfindungsgemäßen Keramikschichten können insbesondere im Hinblick auf eine Permeabilität oder Impermeabelität von Gasen optimiert werden. Sofern die erfindungsgemäßen Keramikschichten für die Permeabilität von Gasen optimiert werden sollen, wird die keramische insbesondere Schicht derart aufgebracht, dass sie eine offene Porosität aufweist. Die Porosität wird dabei über den Porositätsgrad definiert. Dieser ist erfindungsgemäß definiert als Verhältnis zwischen dem Porenvolumen zum Gesamtvolumen. Befinden sich keine Poren im Material, ist der Porositätsgrad entsprechend null. Der Porositätsgrad für erfindungsgemäße, permeable Keramikschichten ist insbesondere größer als 0.0001%, vorzugsweise größer als 0.01%, mit größerem Vorzug größer als 1%, mit größtem Vorzug größer als 5%, mit allergrößtem Vorzug größer als 10%, am bevorzugtesten größer als 25%. Hierdurch kann insbesondere festgelegt werden, wie viele Moleküle pro Zeiteinheit die Keramikschicht passieren können.

Für permeable keramische Schichten wird ein mittlerer Porendurchmesser bzw. eine mittlere Porengröße durch den erfindungsgemäßen Prozess insbesondere mindestens so groß gewählt wie der mittlere Durchmesser der Molekülsorte, welche die keramische Schicht passieren soll. Für permeable keramische Schichten ist der mittlere Porendurchmesser daher vorzugsweise größer als 1nm, mit Vorzug größer als 10nm, mit größerem Vorzug größer als 50nm, mit allergrößtem Vorzug größer als 100nm.

Unter dem mittleren Porendurchmesser wird der mittlere Durchmesser der Poren verstanden. Die Poren werden dabei vorzugsweise als radialsymmetrisch angenommen. Beim Zusammenschluss mehrerer Poren entlang einer Strecke, und der Ausbildung eines Porenschlauchs wäre dies entsprechend der mittlere Schlauchdurchmesser. Der mittlere Porendurchmesser stellt insbesondere einen oberen Grenzwert für die Molekülgröße der Moleküle dar, welche über die Poren in die keramische Schicht eindringen sollen.

Sofern die erfindungsgemäßen Keramikschichten für die Impermeabelität von Gasen optimiert werden sollen, wird die keramische Schicht insbesondere derart aufgebracht, dass sie eine geschlossene, noch bevorzugter keine, Porosität aufweist. Der Porositätsgrad ist insbesondere kleiner als 25%, vorzugsweise kleiner als 10%, bevorzugter kleiner als 5%, noch bevorzugter kleiner als 1%, am bevorzugtesten kleiner als 0.01%, am allerbevorzugtesten kleiner als 0.0001%.

Für impermeable keramische Schichten ist der mittlere Porendurchmesser insbesondere kleiner als 100nm, mit Vorzug kleiner als 50nm, mit größerem Vorzug kleiner als 10nm, mit allergrößtem Vorzug kleiner als 1nm.

In einer erfindungsgemäßen ersten Ausführungsform wird der Niedertemperaturbeschichtungsprozess dazu verwendet, eine erste Seite eines ersten Trägersubstrats mit einer erfindungsgemäßen Keramikschicht, insbesondere Siliziumdioxidschicht, zu beschichten. Die Schichtdicke der Keramikschicht ist dabei kleiner insbesondere als 11µm, vorzugsweise kleiner als 100nm, noch bevorzugter kleiner als 10nm, am bevorzugtesten kleiner als 1nm und weist vorzugsweise eine der oben erwähnten Porositätseigenschaften auf.

In einer erfindungsgemäßen zweiten Ausführungsform wird der Niedertemperaturbeschichtungsprozess dazu verwendet, beide Seiten eines ersten Trägersubstrats mit einer erfindungsgemäßen Keramikschicht, insbesondere Siliziumdioxidschicht, zu beschichten. Die Dicke der ersten Keramikschicht auf der ersten Seiten des Trägersubstrats ist insbesondere kleiner als 1µm, vorzugsweise kleiner als 100nm, noch bevorzugter kleiner als 10nm, am bevorzugtesten kleiner als 1nm und weist, insbesondere bezogen auf beide Keramikschichten gemeinsam, vorzugsweise eine der oben erwähnten Porositätseigenschaften auf. Insbesondere ist die Dicke zweiten Keramikschicht auf der zweiten Seite des Trägersubstrats gleich der Dicke der ersten Keramikschicht auf der ersten Seite des Trägersubstrats. Die Dicken der beiden Keramikschichten können aber auch unterschiedlich sein, um unterschiedliche Anforderungen an beiden Seiten berücksichtigen zu können.

In einer erfindungsgemäßen dritten Ausführungsform wird der Niedertemperaturbeschichtungsprozess dazu verwendet, die internen Oberflächen eines porösen Trägersubstrats mit einer erfindungsgemäßen Keramikschicht, insbesondere Siliziumdioxidschicht, zu beschichten. Die Dicke der Keramikschicht auf der internen Oberfläche des Trägersubstrats ist insbesondere kleiner als 1µm, vorzugsweise kleiner als 100nm, noch bevorzugter kleiner als 10nm, am bevorzugtesten kleiner als 1nm. Ein derartiges poröses Trägersubstrat kann Nach der Beschichtung der internen Oberfläche des Trägersubstrats kann wiederum eine Beschichtung der ersten und/oder zweiten Oberfläche des Trägersubstrats gemäß den ersten beiden erfindungsgemäßen Ausführungsformen erfolgen.

Die erfindungsgemäßen Ausführungsformen werden durch einen Niedertemperaturbeschichtungsprozess hergestellt, welcher eine Verbrennung oder Oxidation oder eine thermische Zersetzung oder Pyrolyse des Trägermaterials verhindert. Ein besonders bevorzugter Prozess ist ein Niedertemperaturbeschichtungsprozess, bei dem eine Siliziumoxidschicht in einer Ammoniakatmosphäre aufgebracht wird.

In einem ersten Prozesschritt wird ein Siliziumprecursor (Siliziumpräkursor, also ein Silizium enthaltendes Molekül) mit einem Wassergehalt von weniger als 25 Vol-%, bevorzugter weniger als 10 Vol-%, am bevorzugtesten weniger als 5 Vol-% durch die Vermischung eines Silikats, insbesondere eines oligomerischen Organosilikats, noch bevorzugter einem Kieselsäuretetramethylester-Homopolymers, mit einem Lösungsmittel hergestellt. Das oligomerischen Organosilikat besteht typischerweise und insbesondere vorwiegend aus Kieslesäuretetramethlyester-Monomeren. Es kann durch beliebige andere Monomere ergänzt werden. Bei dem Lösungsmittel handelt es sich insbesondere um einen Alkohol, Wasser oder ein Alkohol-Wasser-Gemisch. Der Siliziumprecursor besteht bevorzugt aus einem Mengenverhältnis von 0.01-1 Teil Wasser auf 0.02-100 Teile Alkohol, bezogen auf 1 Teil des zugrundeliegenden Polymers. Der pH Wert des Precursors liegt zwischen 0 und 14, vorzugsweise zwischen 3 und 11, noch bevorzugter zwischen 5 und 9, am bevorzugtesten um die 7.

In einem zweiten Prozesschritt wird dieser Siliziumprecursor auf die zu beschichtende Oberfläche aufgebracht und in einer ammoniakhaltigen Atmosphäre gehärtet. Die Aufbringung erfolgt durch einen der folgenden Prozesse:
- Rotationsbeschichtung (spin-Prozess)
- Sprühbeschichtung
- Chemische Gasphasenabscheidung (CVD)
- Plasmaunterstützte Chemische Gasphasenabscheidung (PE-CVD)
- Physikalische Gasphasenabscheidung (PVD)
- Tauchbeschichtung
- Elektrochemische Beschichtung
- Stromlose Abscheidung
- Metallorganische Zersetzung
- Sol-Gel-Prozesse

Danach erfolgt eine Beaufschlagung der aufgebrachten Precursor-Schicht mit Ammoniak in einer Ammoniakatmosphäre. Die Ammoniakatmosphäre besteht insbesondere vorwiegend aus Wasser, Ammoniak und Alkohol. Die Atmosphäre zur erfindungsgemäßen Aushärtung wird insbesondere aus einem Flüssigkeitsgemisch von Alkohol und Ammoniaklösung erzeugt. Das Volumenverhältnis von Alkohol zu Ammoniaklösung liegt zwischen 0.01 und 100, vorzugsweise zwischen 0.1 und 10, am bevorzugtesten bei 1. Bevorzugt werden daher dieselben Mengen an Alkohol und Ammoniak verwendet. Beispielsweise werden bei 10 ml Alkohol bevorzugt 10 ml Ammoniaklösung verwendet, um die Atmosphäre herzustellen. Die Konzentration der Ammoniaklösung liegt insbesondere zwischen 5% und 50%, vorzugsweise zwischen 10% und 40%, am bevorzugtesten zwischen 20% und 30%, am allerbevorzugtesten bei 25%. Das erzeugte Flüssigkeitsgemisch verdampft und sorgt damit für die den Siliziumprecursor aushärtende Ammoniakatmosphäre.

In einer bevorzugten erfindungsgemäßen Ausführungsform erfolgt die Einleitung von Ammoniakgas in die Arbeitskammer. Das Ammoniakgas wird dabei vorzugsweise mit einem Alkohol, insbesondere Methanol, vermischt. Des Weiteren erfolgt insbesondere eine Addition eines Trägergases, insbesondere von Stickstoff, zum Transport des Alkohols und/oder des Ammoniaks. Durch die Einleitung eines Ammoniakgases kann auf Ammoniaklösungen als Flüssigkeit gänzlich verzichtet werden.
In beiden erfindungsgemäßen Ausführungsformen liegt der Druck während der Aushärtung des Siliziumprecursors in der Arbeitskammer zwischen 10⁻³mbar und 10 bar, vorzugsweise zwischen 10⁻¹mbar und 5 bar, noch bevorzugter zwischen 0.8 bar und 1.2 bar, am bevorzugtesten bei 1 bar.

Ein wesentlicher erfindungsgemäßer Vorteil besteht darin, dass die Herstellung von keramischen Schichten, insbesondere Siliziumdioxidschichten, bei Raumtemperatur oder zumindest bei sehr geringen Temperaturen, insbesondere bei Temperaturen unterhalb des Flamm- und/oder Brenn- und/oder Zersetzungspunktes des Trägermaterials, möglich ist. Dadurch wird erst die erfindungsgemäße Beschichtung eines Kunststoff- und/oder Zellulose-haltigen Materials ermöglicht.

Um einen hohen Produktdurchsatz bei der Herstellung einer erfindungsgemäßen Verpackung zu gewährleisten, hat es sich als vorteilhaft herausgestellt, die Behälterkörper geometrisch linear (vorzugsweise translatorisch) durch Beschichtungsmittel zur Aufbringung der keramischen Beschichtung durchlaufen zu lassen, also den Transportweg so auszubilden, dass die Behälterkörper jeweils eine Position der Beschichtungsmittel nur einmal durchlaufen. Hierdurch wird eine durchlaufende Produktion ermöglicht ein erhöhter Durchsatz ermöglicht, indem zeitgleich Behälterkörper aus dem Beschichtungsmittel zu- und abgeführt werden können.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Figur 1: eine nicht maßstabsgetreue, schematische Querschnittsteildarstellung einer ersten erfindungsgemäßen Ausführungsform,
- Figur 2: eine nicht maßstabsgetreue, schematische Querschnittsteildarstellung einer zweiten erfindungsgemäßen Ausführungsform und
- Figur 3: eine nicht maßstabsgetreue, schematische Querschnittsteildarstellung einer dritten erfindungsgemäßen Ausführungsform.

In den Figuren sind gleiche oder gleichwirkende Merkmale mit den gleichen Bezugszeichen gekennzeichnet.

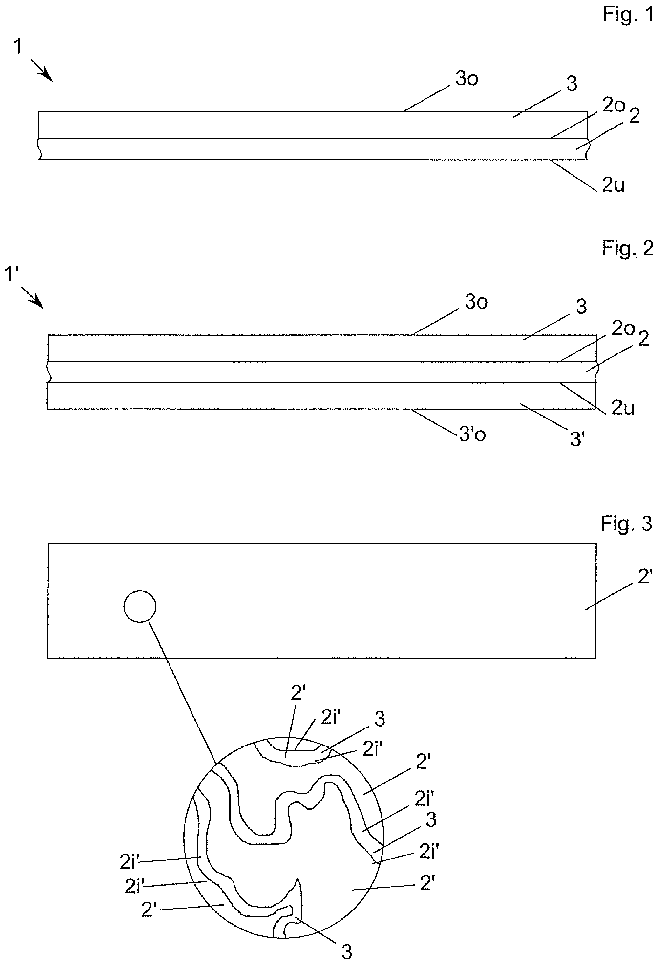

Figur 1 zeigt eine nicht maßstabsgetreue, schematische Querschnittsteildarstellung einer nur ausschnittsweise dargestellten Verpackung 1 mit einem Trägersubstrat 2, insbesondere einer Kunststofffolie oder eines zellulosehaltigen Materials, das an seiner ersten Oberfläche 2o mit einer keramischen Schicht, nämlich einer Siliziumdioxidschicht 3, bei Atmosphärendruck und Raumtemperatur beschichtet wurde.

Figur 2 zeigt eine nicht maßstabsgetreue, schematische Querschnittsteildarstellung einer nur ausschnittsweise dargestellten Verpackung 1' bestehend aus:
- einem Trägersubstrat 2, insbesondere eine Kunststofffolie oder ein zellulosehaltiges Material, mit der ersten Oberfläche 2o und einer zweiten, gegenüberliegenden (unteren) Oberfläche 2u,
- einer auf die erste Oberfläche 2o aufgebrachten keramischen Schicht 3 und
- einer auf die zweite Oberfläche 2u aufgebrachten keramischen Schicht 3'.

Figur 3 zeigt eine nicht maßstabsgetreue, schematische Querschnittsdarstellung eines voluminösen Trägersubstrats 2', dessen intere Oberflächen 2i' durch das erfindungsgemäße Verfahren mit einer keramischen Schicht 3 beschichtet wurden. Die Beschichtung der Innenseiten 2i' eines voluminösen Trägersubstrats 2' kann auch als Imprägnierung verstanden werden.

### Bezugszeichenliste

- 1, 1': Verpackung/Verpackungsfolie
- 2, 2': Trägersubstrat/Trägermaterial
- 2o: erste Oberfläche
- 2u: zweite Oberfläche
- 2i': intere Oberfläche
- 3, 3': Siliziumdioxidschicht
- 3o, 3o': dritte Oberfläche

## Patentansprüche

1. Verfahren zur Herstellung eines Lebensmittelverpackungsmaterials (1, 1') durch Aufbringung einer Siliziumdioxidschicht (3, 3') auf ein zellulosehaltiges Trägermaterial (2, 2') und/oder zur Imprägnierung eines voluminösen, großvolumigen, porösen oder durchlässigen, zellulosehaltigen Trägermaterials (2, 2') mit einer Siliziumdioxidschicht (3, 3'), wobei bei der Imprägnierung eine Beschichtung einer Oberfläche von Hohlräumen erfolgt,
mit folgendem Ablauf:
- Beschichten des Trägermaterials (2, 2') mit einer durch Lösen eines, insbesondere oligomerischen, Silikats, vorzugsweise eines Kieselsäuretetramethylester-Homopolymers, in einem Lösungsmittel hergestellten Siliziumdioxid-Precursor-Lösung mit einem Wassergehalt <25 Vol-% und
- Aushärten der Siliziumdioxid-Precursor-Lösung und dadurch Ausbildung der Siliziumdioxidschicht (3, 3') auf dem Trägermaterial (2, 2') in einer zumindest teilweise dampfförmigen AmmoniakAtmosphäre bei:
a) einer Temperatur zwischen 5°C und 100°C und
b) einem Druck zwischen 10⁻³ mbar und 10 bar.

2. Verfahren nach Anspruch 1, bei dem die Siliziumdioxidschicht (3, 3') mit einer Schichtdicke < 1µm aufgebracht/ausgebildet wird.

3. Verfahren nach einem der vorhergehenden Ansprüche, bei dem das Beschichten und/oder das Aushärten bei Raumtemperatur und/oder Atmosphärendruck durchgeführt wird/werden.

4. Verfahren nach einem der vorhergehenden Ansprüche, bei dem als Trägermaterial (2, 2') ein Material mit
einer Zündtemperatur > 150°C und < 300°C
verwendet wird.

5. Verfahren nach einem der vorhergehenden Ansprüche, bei dem das Trägermaterial (2, 2') vor dem Aufbringen der Siliziumdioxidschicht (3, 3') an wenigstens einer zu beschichtenden Oberfläche (2o, 2u) mit einem Plasma behandelt wird.

6. Waferbox, hergestellt aus einem mit einem Verfahren gemäß einem der obigen Ansprüche beschichteten Trägermaterial (2, 2').

## Claims

1. A method for producing a package material for food stuffs by depositing a silicon dioxide layer (3, 3') on a cellulose containing carrier material (2, 2') and/or for impregnation of a voluminous, large volume, porous or permeable, cellulose-containing carrier material (2, 2') with a silicon dioxide layer (3, 3'), wherein during impregnation a coating of a surface of hollow spaces takes place,
with the following sequence:
- coating of the carrier material (2, 2') with a silicon dioxide precursor solution prepared by dissolving a, in particular oligomeric, silicate, preferably a silicic acid tetramethyl ester homopolymer, in a solvent, said silicon dioxide precursor solution having a water content < 25 vol.%, and
- hardening of the silicon dioxide precursor solution and thus forming the silicon dioxide layer (3, 3') on the carrier material (2, 2') in an at least partially vaporous ammonia atmosphere at:
a) a temperature between 5 °C and 100 °C and
b) a pressure between 10⁻³ mbar and 10 bar.

2. The method according to claim 1, wherein the silicon dioxide layer (3, 3') is deposited/formed with a layer thickness < 1 µm.

3. The method according to any one of the preceding claims, wherein the coating and/or the hardening is/are carried out at room temperature and/or atmospheric pressure.

4. The method according to any one of the preceding claims, wherein, as a carrier material (2, 2'), use is made of a material with
an ignition temperature > 150 °C and < 300 °C.

5. The method according to any one of the preceding claims, wherein the carrier material (2, 2'), before deposition of the silicon dioxide layer (3, 3'), is treated with a plasma on at least one surface (2o, 2u) to be coated.

6. Waferbox, produced with a carrier material (2, 2') coated with a method according one of the proceeding claims.

## Revendications

1. Procédé de fabrication d'un matériau d'emballage de produit alimentaire (1, 1') par l'application d'une couche de dioxyde de silicium (3, 3') sur un matériau porteur (2, 2') contenant de la cellulose et/ou pour imprégner un matériau porteur (2, 2') contenant de la cellulose, volumineux, de grande dimensions, poreux ou perméable avec une couche de dioxyde de silicium (3, 3'), dans lequel lors de l'imprégnation, un recouvrement d'une surface de cavités est effectué, avec le déroulement suivant :
- recouvrement du matériau porteur (2, 2') avec une solution de précurseur de dioxyde de silicium fabriquée dans un solvant par séparation d'un silicate en particulier oligomère, de préférence un homopolymère de tétra-méthyle d'acide silicique, avec une teneur en eau < 25 de % volumique et
- durcissement de la solution de précurseur de dioxyde de silicium et ainsi formation de la couche de dioxyde de silicium (3, 3') sur le matériau porteur (2, 2') dans une atmosphère d'ammoniac formant au moins partiellement de la vapeur à
a) une température entre 5°C et 100°C et
b) une pression entre 10⁻³ mbar et 10 bar.

2. Procédé selon la revendication 1, dans lequel la couche de dioxyde de silicium (3, 3') est appliquée/formée avec une épaisseur de couche < 1µm.

3. Procédé selon l'une des revendications précédentes, dans lequel le recouvrement et/ou le durcissement est/sont effectué(s) à température ambiante et sous pression atmosphérique.

4. Procédé selon l'une des revendications précédentes, dans lequel on emploie un matériau avec
une température d'inflammation > 150°C et < 300°C en tant que matériau porteur (2, 2').

5. Procédé selon l'une des revendications précédentes, dans lequel le matériau porteur (2, 2'), avant l'application de la couche de dioxyde de silicium (3, 3'), est traité avec un plasma sur au moins une surface (2o, 2u) à recouvrir.

6. Waferbox, fabriquée à partir d'un matériau porteur (2, 2') recouvert par un procédé selon l'une des revendications ci-dessus.
